# EUROPEAN PATENT APPLICATION

(11) **EP 0 599 655 A1**
(43) Date of publication of application: **01.06.1994**
(21) Application number: 93309442.7
(22) Date of filing: 26.11.1993
(51) Int. Cl.: G11B 7/24

(54) **A protective cover for a compact disc**

(30) Priority: 27.11.1992 ZA 929228; 15.07.1993 ZA 935123
(71) Applicant: Lotter, Halcil Robert, Durban, Natal Province (ZA)
(72) Inventor: Lotter, Halcil Robert, Durban, Natal Province (ZA)
(74) Representative: Sturt, Clifford Mark

(57) **Abstract**

A protective cover (10) for a compact disc, comprising a protective sheet element (12) which is attachable to either side of a compact disc, for protecting the side of the compact disc from being damaged. The protective element (12) is of a synthetic plastic material and has an annular configuration which is complementary to the configuration of the sides of a compact disc. The protective element (12) has a layer of an adhesive substance applied to one side to allow it to be attached to a side of a compact disc. The protective cover (10) is specifically suitable for protecting the operative upper side of a compact disc which has a layer of reflective material applied to it. In this application, the protective element (12) has reflective qualities for protecting the layer of reflective material on the compact disc and for repairing the reflectiveness of the reflective layer where it has already been damaged.

## Description

**THIS INVENTION** relates to a protective cover for a compact disc.

A compact disc is defined as a digital audio disc on which sound is read by an optical laser system. The compact disc comprises an annular disc, of a transparent material, defining a centrally located circular engagement portion which defines a hole, the engagement portion engaging with the drive member of a compact disc player. The compact disc has an operative upper side and an operative under side, the operative upper side of the disc being etched to provide information which is detectable by an optical laser beam, the operative upper side further having a layer of a suitable reflective material, for example, chromium, which forms a continuous coat over the etched information. An optical laser beam is transmitted from the compact disc player towards the operative lower side of the disc. The laser beam passes through the disc and is reflected from the reflective layer on the upper side of the disc, the reflected beam being received by the compact disc player where the information is interpreted as sounds.

A problem encountered with such compact discs is that the reflective layer on the operative upper side of the disc may become damaged by, for example, being scratched. If it is scratched to such an extent that the reflective layer is removed on a portion of the disc, the laser beam, when transmitted towards the damaged portion, passes through the disc and is not reflected towards the compact disc player to be interpreted as sounds, and this often renders the disc inutile.

It is also possible that the operative under side of such compact discs may be damaged by, for example, being scratched.

Therefore, it is an object of this invention to provide a protective cover for a compact disc whereby the compact disc may be protected from being damaged.

According to the invention, there is provided a protective cover for a compact disc which includes a protective sheet element which is attachable to either side of a compact disc, for protecting the said side of the compact disc from being damaged, the protective sheet element having an annular configuration which is substantially complementary to the configuration of the side of a compact disc.

The protective sheet element may have a layer of an adhesive substance applied to one side thereof, rendering the said side of the protective sheet element operatively attachable to a side of a compact disc, the adhesive substance providing for the permanent attachment of the protective sheet element to the compact disc.

Alternatively, the protective sheet element may have a layer of an adhesive substance applied to one side thereof, rendering the said side of the protective sheet element operatively attachable to a side of a compact disc, the adhesive substance providing for the removable attachment of the protective sheet element to the compact disc.

The protective sheet element may be provided with a "peel-off" sheet removably attached to the side of the protective element which is attachable to a side of a compact disc. In use, the protective sheet element will have the "peel-off" sheet peeled therefrom before it is attached to a side of the compact disc.

The protective cover may be specifically suitable for protecting the operative upper side of a compact disc which has a reflective layer applied thereto, with the protective sheet element having reflective qualities and being attachable to the operative upper side of the compact disc, for protecting the layer of reflective material on the operative upper side of the compact disc from being damaged, and for repairing the reflectiveness of the reflective layer where damage to the reflective layer has already occurred.

The protective sheet element may be transparent to allow writing on an upwardly facing non-reflective surface of the reflective layer of the compact disc to be clearly discernable to a user, when applied to the said side of the compact disc.

The protective sheet element may be of a suitable reflective material. Alternatively, the protective sheet element may have a layer of reflective material applied thereto. Still alternatively, the protective sheet element may be impregnated with a suitable material having reflective qualities, providing the protective sheet element with required reflective qualities.

The protective element may be of a synthetic plastic material e.g. vinyl.

Further features of the protective cover of the invention, including the mode of use of the protective cover, are described in more detail hereinafter with reference to an example of the invention, illustrated by way of the drawings. In the drawings:
Figure 1 shows a three-dimensional view of a protective cover in accordance with the invention;
Figure 2 shows a three-dimensional view of a compact disc to which the protective cover of Figure 1 is attachable; and
Figure 3 shows a plan view of the protective cover of Figure 1 provided with a "peel-off" backing sheet.

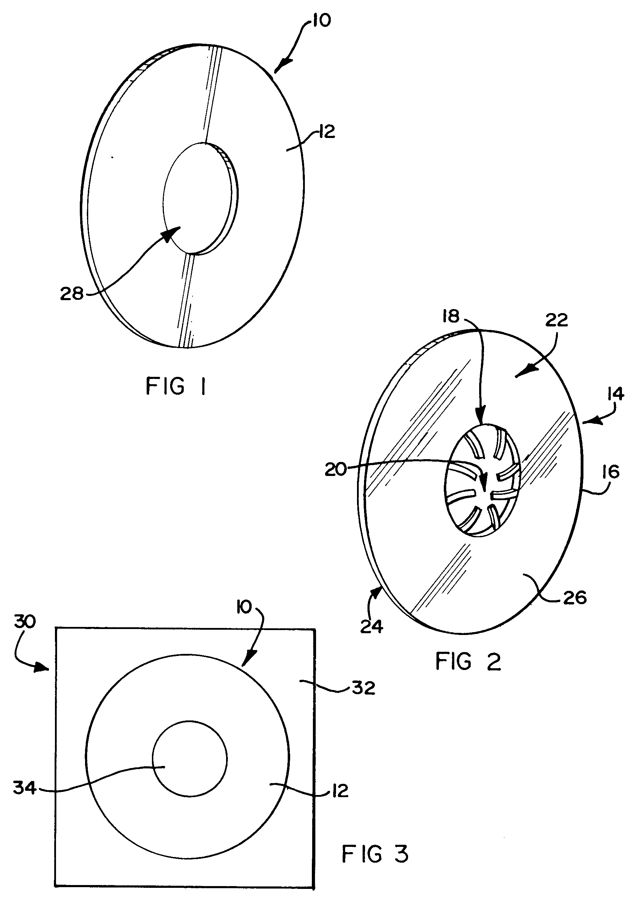

Referring initially to Figures 1 and 3 of the drawings, a protective cover for a compact disc, is designated generally by the reference numeral 10. The protective cover 10 comprises a protective sheet element 12 having reflective qualities, of a vinyl plastic material which is flat and which has an annular configuration, the protective sheet element 12 being attachable to the operative upper side of a compact disc.

Referring now to Figure 2, a compact disc is designated generally by the reference numeral 14. The compact disc 14 comprises an annular disc 16 of a transparent synthetic plastic material, the disc 16 defining a centrally located circular engagement portion 18 which defines a hole 20, therethrough. The engagement portion 18 engages with the drive member of a compact disc player. The disc 14 has an operative upper side 22 and an operative lower side 24. The operative upper side 22 is etched (not shown) to provide information which is operatively detectable by an optical laser beam and has a layer of reflective material 26, for example, chromium, which forms a continuous coat of the reflective material 26 over the etched information. This general configuration of the compact disc 14 is conventional and, therefore, is not described in any further detail herein.

If the disc 14 is not protected and damage occurs to the layer of reflective material 26, which is of such a nature that the reflective material 26 is removed on a portion of the disc 14, the laser beam passes through this portion, in use, and is not reflected towards the compact disc player to be interpreted as sounds, thereby rendering the disc 14 inutile.

The protective sheet element 12 has an annular configuration which is substantially complementary to the configuration of the operative upper side 22 of the compact disc 14. The protective element 12 has a centrally located hole 28, the configuration and dimension of the hole 28 of the protective element 12 being operatively complementary with the centrally located engagement portion 18 defined by the compact disc 14, in use.

The protective element 12 is of a reflective vinyl plastic material. In another embodiment of the invention, the protective element 12 has a layer of reflective material applied thereto. Alternatively, the protective element 12 is impregnated with a suitable material having reflective qualities in order to render the protective element 12 reflective, e.g. chromium, gold or silver material.

The protective element 12 is transparent to allow writing on the upwardly facing non-reflective surface of the layer of reflective material 26 of the compact disc 14 to be clearly discernable to a user.

The protective element 12 is attachable to the operative upper side 22 of the compact disc 14, for protecting the layer of reflective material 26 on the upper side 22 from being damaged by, for example, from being scratched, and for repairing the reflectiveness of the layer of reflective material 26 where damage to the layer of reflective material 26 has already occurred. The protective element 12 is attachable to the operative upper side 22 of the disc 14 by means of a suitable adhesive substance. In particular, the protective element 12 has a layer of an adhesive substance applied to one side of the protective element 12 rendering the side of the protective element 12 operatively attachable to the compact disc 14.

The protective element 12 also provides protection for the information which is etched onto the upper side 22 of the compact disc 14.

In another application, the protective cover may comprise a protective sheet element which is attachable to the operative under side 24 of the compact disc 14, for protecting the under side 24 of the compact disc 14 from being damaged. The features of this protective sheet element incorporates similar features to that of the protective element 12, with a difference being that the protective element for protecting the operative under side of a compact disc is not required to have reflective qualities.

Referring particularly to Figure 3, the protective element 12 is provided with a "peel-off" backing sheet, generally designated by the reference numeral 30, which is removably attached to the protective element 12 and which is removable by peeling from the protective element 12 prior to the protective element 12 being attached to the operative upper side 22 or the operative lower side 24 of the compact disc 14. The "peel-off" backing sheet 30 serves to protect the side of the protective element 12 to which the layer of adhesive substance is applied and further maintains the shape of the protective element 12 prior to the backing sheet 30 being peeled therefrom and the element 12 can thus be attached to the compact disc 14. After the backing sheet 30 has been peeled off the protective element 12, two throw-away portions 32 and 34 remain, which can be thrown away.

It is envisaged by the Applicant that suitable protective elements for protecting both of the operative under side and the operative upper side of a compact disc may be provided.

The Applicant believes that damage, particularly to the layer of reflective material of a compact disc, e.g. by scratching, is a fairly common occurrence and that the protective cover of his invention provides a simple yet effective means of protecting a compact disc against such damage.

The Applicant further believes that the reflective qualities of the protective element of the protective cover conveniently repairs the reflectiveness of the layer of reflective material of a compact disc.

## Claims

1. A protective cover (10) for a compact disc, which protective cover is characterized in that it comprises a protective sheet element (12) which is attachable to either side of a compact disc, for protecting the said side of the compact disc from being damaged, the protective sheet element (12) having an annular configuration which is substantially complementary to the configuration of the side of a compact disc.

2. A protective cover as claimed in Claim 1, characterized in that the protective sheet element (12) has a layer of an adhesive substance applied to one side thereof, rendering the said side of the protective sheet element (12) operatively attachable to a side of a compact disc, the adhesive substance providing for the permanent attachment of the protective sheet element (12) to the compact disc.

3. A protective cover as claimed in Claim 1, characterized in that the protective sheet element (12) has a layer of an adhesive substance applied to one side thereof, rendering the said side of the protective sheet element (12) operatively attachable to a side of a compact disc, the adhesive substance providing for the removable attachment of the protective sheet element (12) to the compact disc.

4. A protective cover as claimed in any one of the preceding claims, characterized in that the protective sheet element (12) is provided with a "peel-off" sheet (30) removably attached to the side of the protective sheet element (12) which is attachable to the side of a compact disc.

5. A protective cover as claimed in any one of the preceding claims, characterized in that it is specifically suitable for protecting the operative upper side of a compact disc which has a reflective layer applied thereto, with the protective sheet element having reflective qualities and being attachable to the operative upper side of a compact disc, for protecting the layer of reflective material on the operative upper side of the compact disc from being damaged, and for repairing the reflectiveness of the reflective layer where damage to the reflective layer has already occurred.

6. A protective cover as claimed in Claim 5, characterized in that the protective sheet element (12) is of a reflective material.

7. A protective cover as claimed in Claim 5, characterized in that the protective sheet element (12) has a layer of reflective material applied thereto.

8. A protective cover as claimed in Claim 5, characterized in that the protective sheet element (12) is impregnated with a suitable material having reflective qualities in order to render the protective sheet element reflective.

9. A protective cover as claimed in any one of the preceding claims, characterized the protective sheet element (12) is of a transparent material.

10. A protective cover as claimed in any one of the preceding claims, characterized in that the protective sheet element (12) is of a synthetic plastic material.

11. A protective cover for a compact disc substantially as described in the specification with reference to and as illustrated in the accompanying drawings.
